# EUROPEAN PATENT SPECIFICATION

(11) **EP 3 745 294 B1**
(45) Date of publication and mention of the grant of the patent: **14.06.2023**
(21) Application number: 19218391.1
(22) Date of filing: 20.12.2019
(51) Int. Cl.: G06F 30/10, B22F 10/66, B22F 10/85, B29C 64/188, B29C 64/393, B29C 69/00, B33Y 40/20, G06F 113/10

(54) **METHOD FOR PRODUCING THREE-DIMENSIONAL SHAPED PRODUCT BY JOINING TOP UNDERCUT REGION AND BOTTOM INTERIOR SPACE-FORMING REGION**
VERFAHREN ZUR HERSTELLUNG EINES DREIDIMENSIONALEN FORMKÖRPERS DURCH VERBINDEN DES OBEREN HINTERSCHNITTENEN BEREICHS UND DES UNTEREN INNENRAUMBILDENDEN BEREICHS
PROCÉDÉ PERMETTANT DE PRODUIRE UN PRODUIT MOULÉ TRIDIMENSIONNEL EN JOIGNANT LA RÉGION DE CONTRE-DÉPOUILLE SUPÉRIEURE ET LA RÉGION INFÉRIEURE FORMANT L'ESPACE INTÉRIEUR

(30) Priority: 27.05.2019 JP 2019098721
(43) Date of publication of application: 02.12.2020
(73) Proprietor: Matsuura Machinery Corporation, Fukui City, Fukui (JP)
(72) Inventor: TARUMI, Satoru, Fukui City, Fukui (JP)
(74) Representative: Lambacher, Michael

(56) References cited:
- CN-A- 108 161 000
- CN-A- 108 480 821
- US-A1- 2019 105 844
- WEI DU ET AL: "A Novel Method for Additive/Subtractive Hybrid Manufacturing of Metallic Parts", PROCEDIA MANUFACTURING, vol. 5, 1 January 2016 (2016-01-01), pages 1018-1030, XP055657228, 43rd North American Manufacturing Research Conference, NAMRC 43, 8-12 June 2015, UNC Charlotte, North Carolina, United States ISSN: 2351-9789, DOI: 10.1016/j.promfg.2016.08.067

## Description

### [Technical Field]

The present invention relates to a method for producing a three-dimensional shaped product by joining a top undercut region and a bottom interior space-forming region, wherein, after lamination, sintering and cutting of the bottom interior space-forming region are carried out first, lamination and sintering of the top undercut region are carried out.

### [Background Art]

Three-dimensional shaped products which is formed according to lamination with a powder while a squeegee is traveling, sintering with irradiation of a laser beam or an electron beam and cutting by a traveling cutting tool, include three-dimensional shaped products with a construction in which a top undercut region, i.e. the undercut region having the lower side formed by lamination and sintering, is joined with a pipe-shaped region forming the interior space on the lower side.

Control for three-dimensional shaping is usually accomplished by a CAD/CAM system, but for creation of a cutting path for a cutting tool by the CAD/CAM system, it is presupposed that the regions containing the cutting path are regions in which the cutting tool can be inserted.

For formation of an enclosed interior space of the three-dimensional shaped product, therefore, such as the inner side of a water conduit, it is considered to be impossible to automatically create the cutting path in the interior space by the CAD/CAM system unless the cutting tool can be inserted from the start.

In light of this problem, Patent Document 1 proposes using a laser light beam for interior cutting of the three-dimensional shaped product by the CAD/CAM system with adjustment of the focal point of the light beam, thereby avoiding using the cutting tool to create the cutting path in the interior space.

In contrast, in Patent Document 2 and Patent Document 3, a horizontal cutting path is formed in the three-dimensional shaped product which forms the interior space, by the following steps set by the CAD/CAM system.
(1) An imaginary horizontal plane, i.e. a planned cutting plane, is defined at an intermediate location between the top edge and the bottom edge of the interior space.
(2) A horizontal cutting path is created in the lower region of the planned cutting plane.
(3) A horizontal cutting path is created in the upper region of the planned cutting plane.
(4) Upon reaching the stage of cutting the horizontal cutting path located at the top edge within the horizontal cutting path of (2) above, a command to terminate cutting on the planned cutting plane of (1) above is set, and both horizontal cutting paths are joined by a command to progress to cutting of the horizontal cutting path located on the bottom edge within the horizontal cutting path of (3) above.

However, it is essential to create a special program for joining of both horizontal cutting paths at the top edge and bottom edge, as in (4) above.

Furthermore, the undercut region is usually present on the upper side of the planned cutting plane, and when the inner surface of the undercut region is cut, the cutting tool necessarily switches from the cutting portion on the upper side to the undercut cutting portion, making it unavoidable for the cutting width to be a small cutting width.

In step (3) above, however, the same cutting width is set as in step (2) above, and no consideration is given to switching of the cutting tool to an undercut cutting tool.

When a process is employed like the present invention, wherein the top undercut region and the bottom interior space-forming region are separately produced and both regions are joined, there is no need to create a planned cutting plane as in Reference 2, because the top edge of the interior space region on the lower side is opened.

However, when cutting with the side being the location of the top edge of the interior wall section of the region forming the interior space is carried out as final stage cutting step, the CAD/CAM system progresses to a step of automatically cutting a plane at the opening at the top edge in the horizontal direction by a program provided by the system itself.

Needless to mention, such cutting of the opening edge is unnecessary and meaningless, and is also a major hindrance in terms of accomplishing efficient three-dimensional shaping.

Still further, from Patent Document 4 a manufacturing process of a complex component by additive manufacturing is known. The manufacturing process comprises the creation of a three-dimensional model of parts of the complex component through finite element analysis software, the division of the component into several processing parts according to predetermined division conditions including the geometric shape and size, and a laser additive manufacturing and machining of each component part, wherein a first part of the complex component is manufactured and machined first and is used as a substrate for the subsequent component parts.

### [Prior Art Documents]

### [Patent Documents]

[Patent Document 1] U.S. patent No. 2002/0100750
[Patent Document 2] Japanese Patent No. 6251447
[Patent Document 3] U.S. Patent Application No. US 2019/0105844 A1
[Patent Document 4] Chinese Patent Application CN 108 161 000 A

### [Summary of Invention]

### [Technical Problem]

It is an object of the present invention to provide a method for efficient shaping of a three-dimensional shaped product by joining of a top undercut region and a lower side interior space-forming region without cutting in the horizontal direction at an opening located at the top edge of the interior space.

### [Solution to Problem]

In order to solve the aforementioned problem, the present invention comprises following basic constructions (a) and (b).
(a) A method for producing a three-dimensional shaped product based on lamination with a powder while a squeegee is traveling, sintering of the laminated layer by irradiation with a laser beam or an electron beam, and cutting of the sintered layer with a traveling cutting tool, wherein an undercut region at an upper side of the product and a pipe-shaped region with an opening at its top edge and with a bottom at a lower side of the product are joined by following steps:
   1. A CAD/CAM system sets the following steps, wherein the CAD/CAM system is programmed to automatically cut in the horizontal direction at the opening at the top edge of the pipe-shaped region when a final cutting stage has been completed:
      (1) Creation of a shape of the undercut region that has an opening corresponding to the opening of the pipe-shaped region at a bottom edge of the undercut region, and creation of a shape of the pipe-shaped region;
      (2) Creation of a cutting path with horizontal direction for each location of successive locations of a cutting blade of the cutting tool on an inner wall of the pipe-shaped region, wherein a center location or a lowest location of the cutting blade is selected as a reference for the cutting path, and wherein the locations on the inner wall are arranged in regular order along an upwards direction from the bottom, wherein a width between successive locations on the inner wall is set by the cutting width of the cutting blade;
      (3) When the cutting path with horizontal direction, created in the regular order in step (2) above, has reached the location of the opening of the pipe-shaped region or a location below the opening of the pipe-shaped region by a shorter distance than the cutting width, setting of a command for further lamination on the top edge of the opening of the pipe-shaped region with the purpose of the CAD/CAM system to judge that cutting at the opening of the pipe-shaped region is not the final cutting stage, avoiding thereby a cutting in the horizontal direction at the opening at the top edge of the pipe-shaped region;
      (4) A command for joining the bottom edge of the undercut region and the top edge of the pipe-shaped region for determining the location of lamination and sintering region of the undercut region with relation to the pipe-shaped region;
   2. Lamination and sintering in the pipe-shaped region based on step 1(1) above;
   3. Cutting the inner wall along the cutting paths with horizontal direction, created by step 1(2) above; and
   4. Lamination and sintering in the undercut region based on steps 1(1) and 1(4) above.
(b) A method for producing a three-dimensional shaped product based on lamination with a powder while a squeegee is traveling, sintering of the laminated layer by irradiation with a laser beam or an electron beam, and cutting of the sintered layer with a traveling cutting tool, wherein an undercut region at an upper side of the product and a pipe-shaped region with an opening at its top edge and with a bottom at a lower side of the product are joined by following steps:
   1. A CAD/CAM system sets the following steps, wherein the CAD/CAM system is programmed to automatically cut in the horizontal direction at the opening at the top edge of the pipe-shaped region (2) when a final cutting stage has been completed:
      (1) Creation of a shape of the undercut region that has an opening corresponding to the opening of the pipe-shaped region at a bottom edge of the undercut region, and creation of a shape of the pipe-shaped region;
      (2) Creation of a cutting path with horizontal direction for each location of successive locations of a cutting blade of the cutting tool on an inner wall of the pipe-shaped region, wherein a center location or a lowest location of the cutting blade is selected as a reference for the cutting path, and wherein the locations on the inner wall are arranged in regular order along an upwards direction from the bottom, wherein a width between successive locations on the inner wall is set by the cutting width of the cutting blade;
      (3) When the cutting path with horizontal direction, created in the regular order in step (2) above has reached the location of the opening of the pipe-shaped region or a location below the opening of the pipe-shaped region by a shorter distance than the cutting width, creating a final stage cutting path with horizontal direction at a location that is above the Nth cutting path, by the cutting width, wherein N represents the number of cutting paths in horizontal direction created in step (2) above for reaching the location of the opening of the pipe-shaped region or the location below the opening of the pipe-shaped region, and setting a command for stopping the cutting operation at the final stage cutting path by the cutting tool before the cutting tool begins to cut along the final stage cutting path, and avoiding cutting in the horizontal direction at the opening at the top edge of the pipe-shaped region;
      (4) A command for joining the bottom edge of the undercut region and the top edge of the pipe-shaped region for determining the location of lamination and sintering of the undercut region with relation to the pipe-shaped region;
   2. Lamination and sintering in the pipe-shaped region based on step 1(1) above.
   3. Cutting the inner wall along the cutting paths with horizontal direction, created by step 1(2) above; and
   4. Lamination and sintering in the undercut region based on steps 1(1) and 1(4) above.

### [Advantageous Effects of Invention]

In the basic constructions (a) and (b), if the bottom interior space-forming region has an opening at the top edge, then the horizontal cutting path may be set as in step 1(2) without setting the planned cutting plane as in Patent Document 2.

Even if the planned cutting plane is not set, it is not necessary to create a special program in order to join the horizontal cutting path on the lower side and the horizontal cutting path on the upper side of the planned cutting plane, as in the construction of Patent Document 2.

However, as is explained under Background Art above, with current CAD/CAM systems, the horizontal cutting path is simply set and cutting is carried out based on the setting, and when the final stage is cutting at the opening where the side is the location of the top edge of the lower region, the CAD/CAM system is programmed to automatically effect control for cutting in the horizontal direction at the opening at the top edge at the stage where the final stage of cutting has been completed, and when cutting is carried out based on the programming, the cutting constitutes a hindrance against efficient shaping.

In the basic construction (a), when cutting has been carried out along the horizontal cutting path of the final stage at the uppermost side in step 1(3), the command for further lamination at the opening of the top edge is set as a subsequent step.

According to the command, the CAD/CAM system judges that further cutting has been carried out after the further lamination and sintering in the region on the upper side of the opening, and judges that the cutting at the opening is not the final stage cutting, thus it is avoided to cut in the horizontal direction at the opening.

In the basic construction (b), a horizontal cutting path on a location at upper side of the location of the top edge by the cutting width of the cutting tool or a horizontal cutting path on a location at upper side of the location of the top edge a shorter distance than the cutting width, i.e. a horizontal cutting path on a location at upper side of the horizontal cutting path by the cutting width at the final stage of the basic construction (a) is set as the cutting path of the final stage, then a command is set for the cutting tool to terminate the cutting operation in the cutting path at the final stage.

According to the terminating command, in the basic construction (b), it is possible to avoid automatic cutting in the horizontal direction at the final stage by the CAD/CAM system, since cutting is not carried out at the final stage.

Furthermore, with the horizontal cutting path located at the second higher point, i.e. the horizontal cutting path at the final stage of the basic construction (a), it is possible for cutting of the opening where the side is as the location of the top edge in the lower region to be the actual cutting step at the final stage.

Additionally, when cutting for an inner surface of the undercut region is carried out as in the embodiment described below, the cutting tool for the undercut region sets a cutting path suited for the cutting width, and the problem does not arise as in Patent Document 2 which ignores the difference between both cutting widths.

### [Brief Description of Drawings]

Fig. 1(a) is a flow chart showing each of the steps of the basic construction (a).
Fig. 1(b) is a vertical cross-sectional view of the basic construction (a).
   It shows selection of a region apparently near the bottom edge of the interior wall section as the start location for the horizontal cutting path in step 1(2).
Fig. 2(a) is a flow chart showing each of the steps of the basic construction (b).
Fig. 2(b) is a vertical cross-sectional view of the basic construction (b).
   It shows selection of the bottom edge of the interior wall section as the start location of the horizontal cutting path in step 1(2).
Fig. 3(a) is a flow chart showing each of the steps for an embodiment in which the inner surface of the undercut region is cut.
Fig. 3(b) is a vertical cross-sectional view for an embodiment in which the inner surface of an undercut region is cut.
Fig. 4 is a side view showing the state of the cutting tool being employed for an Example.

### [Description of Embodiments]

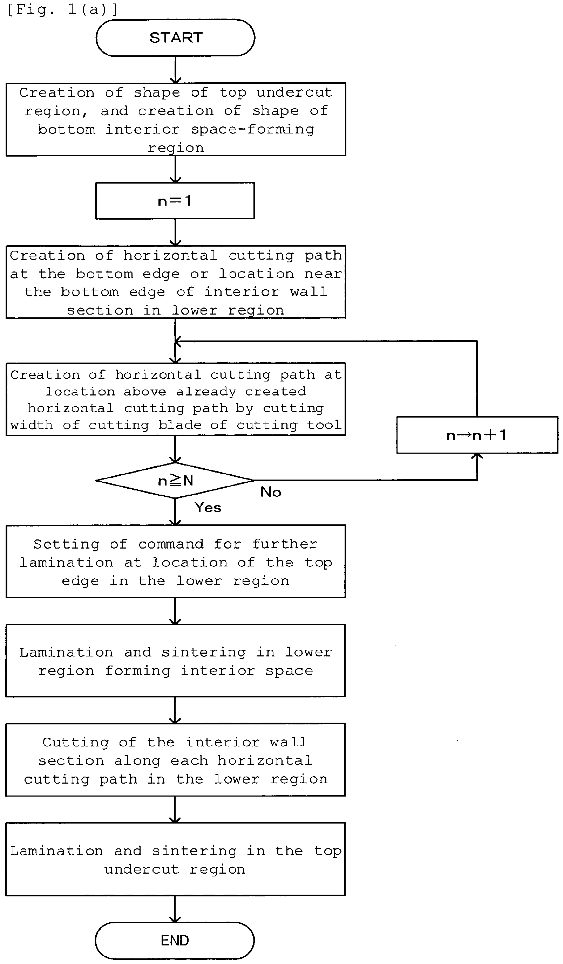

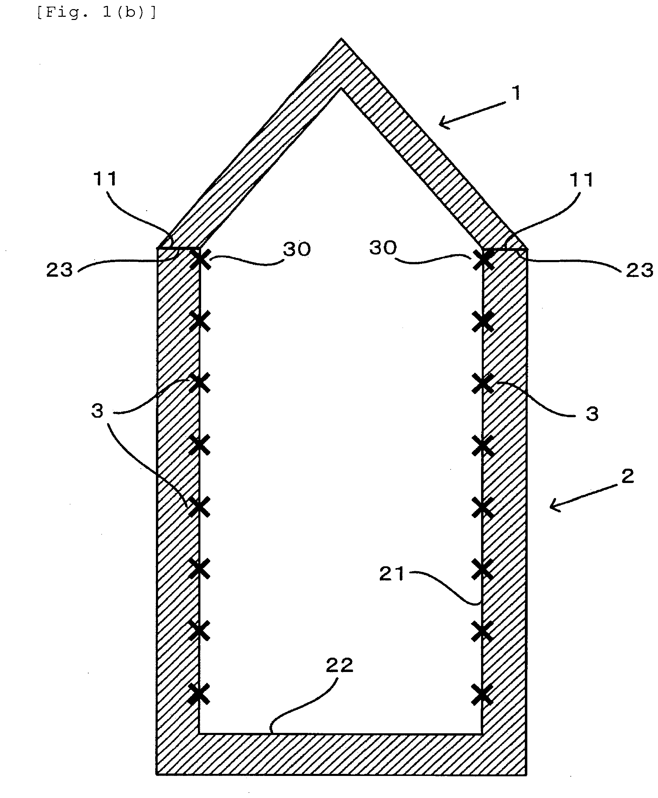

As shown by Fig. 1(a) and (b), in the basic construction (a), shaping is carried out in a bottom interior space-forming region 2 and then the shaping is carried out in a top undercut region 1, by the following steps.

Note that N in Fig. 1(a) represents the number of horizontal cutting paths 3 necessary until the horizontal cutting path 3 reaches a horizontal cutting path 30 at the final stage, which is a location 23 of the top edge of the bottom interior space-forming region 2 or a location below the location 23 by a shorter distance than a cutting width, while Fig. 1(b) represents a case in which the horizontal cutting path 30 at the final stage corresponding to N of Fig. 1(a) is a location below the top edge 23 by a shorter distance than the cutting width.
1. A CAD/CAM system sets the following steps.
   (1) Creation of a shape of the top undercut region 1 that has a bottom edge 11 opening, and creation of a shape of the bottom interior space-forming region 2 that has the top edge 23 opening.
   (2) Creation of the horizontal cutting path 3 based on each prescribed location of a cutting blade of a cutting tool, on an interior wall section 21 in the region 2 on a lower side forming the interior space, at each location in order toward the upper side from a location of the bottom edge or a location of a position apparently near to the bottom edge of the interior wall section 21, with the cutting width of the cutting blade as an unit.
   (3) When the location of the horizontal cutting path 3 created in order in step (2) above has reached the location of a final stage, which is the location of the opening top edge 23 or a location below the location 23 of the top edge by a shorter distance than the cutting width, setting of a command for further lamination at the location 23 of the top edge.
   (4) A command for joining the bottom edge 11 of the undercut region 1 and the top edge 23 of the interior space-forming region 2.
2. Lamination and sintering in the lower region based on step 1(1) above.
3. Cutting the interior wall section 21 along the horizontal cutting paths 3 created by steps 1(2) and 1(3) above.
4. Lamination and sintering in the undercut region 1 based on steps 1(1) and 1(4) above.

In step 1(3) above, since the command for lamination at the opening of the top edge 23 is set, the step of cutting the opening in the horizontal direction, corresponding to be meaningless and a hindrance to working efficiency is not carried out.

Additionally, since lamination and sintering steps in the top undercut region 1 are actually carried out according to the command as the subsequent stage after cutting for the side section of the opening of the top edge 23, then setting of the command does not constitute any particular hindrance in terms of efficiency of shaping.

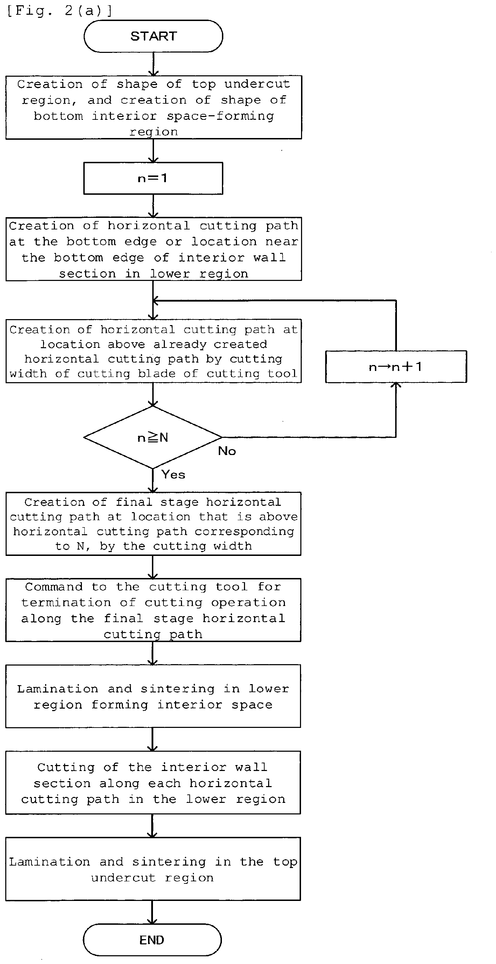

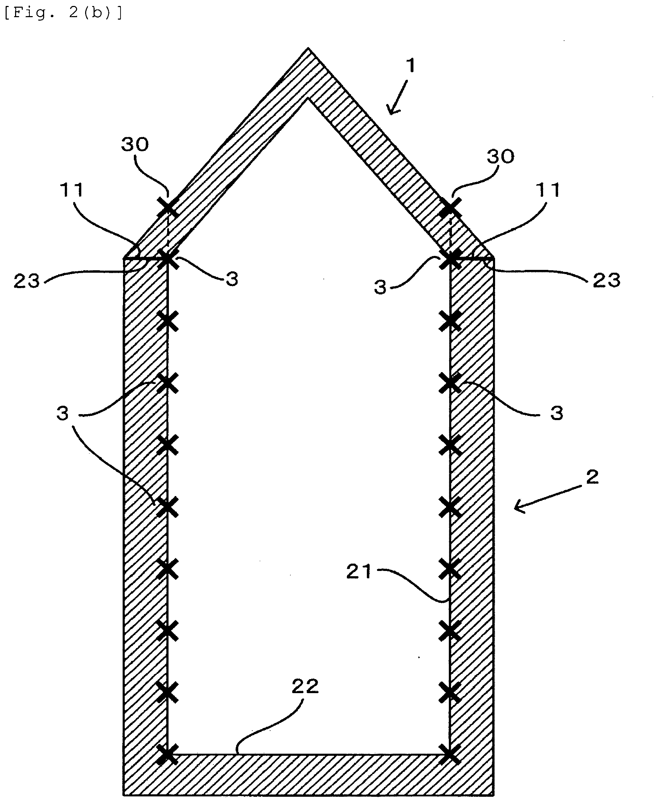

As shown by Fig. 2(a) and (b), in the basic construction (b), shaping is carried out in the bottom interior space-forming region 2 and then the shaping is carried out in the top undercut region 1, by the following steps.

Note that N in Fig. 2(a) represents the number of the horizontal cutting paths 3 necessary until the horizontal cutting path 3 reaches the location 23 of the top edge in the interior space-forming region 2, or a location below the location by a shorter distance than the cutting width, which is a location that is below the cutting location of the final stage by the cutting width, while Fig. 2(b) represents a case in which the location of the horizontal cutting path 3 corresponding to N of Fig. 2(a) is the location 23 of the top edge.
1. The CAD/CAM system sets the following steps.
   (1) Creation of the shape of the top undercut region 1 that has the bottom edge 11 opening, and creation of the shape of the bottom interior space-forming region 2 that has the top edge 23 opening.
   (2) Creation of the horizontal cutting path 3 based on each prescribed location of the cutting blade of the cutting tool, on the interior wall section 21 in the region 2 on the lower side forming the interior space, at each location in order toward the upper side from the location of the bottom edge or a location of a position apparently near to the bottom edge of the interior wall section 21, with the cutting width of the cutting blade as the unit.
   (3) When the location of the horizontal cutting path 3 created in order by step (2) above has reached the location 23 of the opening top edge or a location below the location 23 of the top edge by a shorter distance than the cutting width, creating the horizontal cutting path 30 as a final stage at the upper side by the cutting width for either above location, and setting of a command for terminating cutting operation at the horizontal cutting path 30 of the final stage for the cutting tool.
   (4) A command for joining the bottom edge 11 of the undercut region 1 and the top edge 23 of the interior space-forming region 2.
2. Lamination and sintering in the lower region based on step 1(1) above.
3. Cutting the interior wall section 21 along the horizontal cutting paths 3 created by steps 1(2) and 1(3) above.
4. Lamination and sintering in the undercut region 1 based on steps 1(1) and 1(4) above.

In step 1(3) above, it is possible to carry out cutting for the opening of the top edge 23 in the horizontal direction, since the cutting does not constitute cutting at the final stage by setting the command for terminating cutting along the horizontal cutting path 30 at the final stage which is positioned at upper side of the uppermost cutting path of the basic construction (a) by the cutting width, and corresponds to the uppermost location, and so cutting is carried out along the horizontal cutting path 3 at a second location from the upper side.

Furthermore, since the terminating command is carried out immediately as the subsequent step after completing cutting at the second location from the upper side, the terminating command does not constitute a hindrance against efficient shaping.

Although the uppermost horizontal cutting path 3 stands on idle rolling of the cutting tool, in step 1(3), idle rolling is not carried out actually by the terminating command.

For "each prescribed location of the cutting blade of the cutting tool" in each respective step 1(2) of the basic constructions (a) and (b), it is possible to select any location from the top edge to the bottom edge of the cutting blade, but usually a central location or the bottom edge location will be selected.

So, when the center location of the cutting blade is the reference for the start location of the horizontal cutting path 3 in each respective step 1(2) of the basic constructions (a) and (b), the "location of the bottom edge of the interior wall section 21" must necessarily be selected.

On the other hand, when the location of the bottom edge of the cutting blade is the reference, it is possible to select the "location of the bottom edge or a location near the bottom edge of the interior wall section 21."

In the basic constructions (a) and (b), it is not always necessary to carry out cutting of the lower side that forms the interior wall section 21 in the undercut region 1.

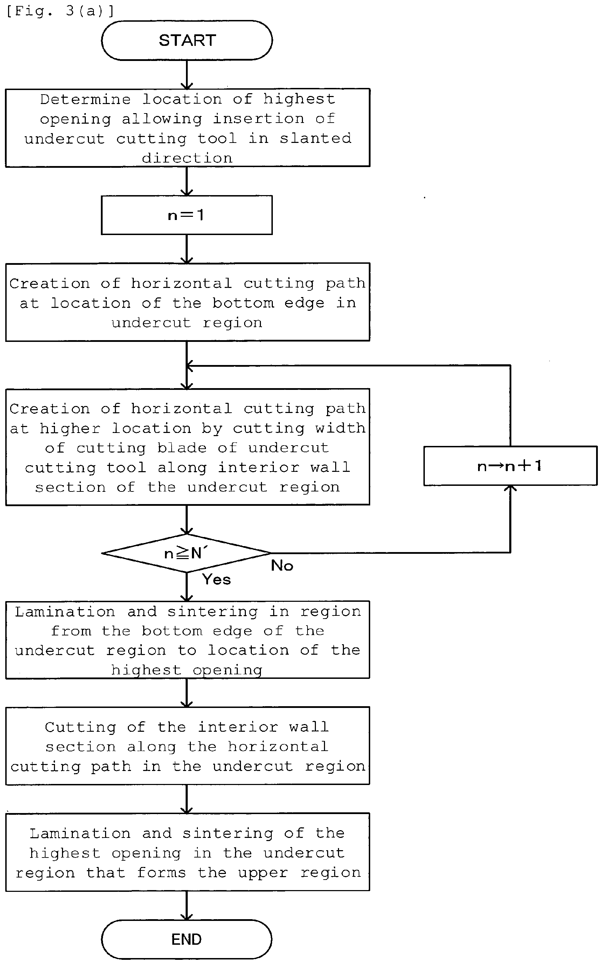

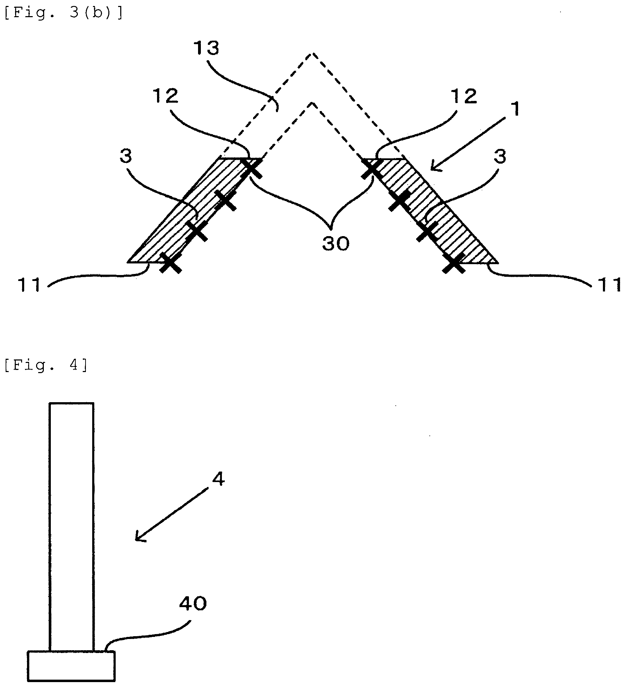

However, for the embodiment consisting of the following steps, as in Fig. 3(a) and (b), it is possible to carry out cutting of the lower side in the undercut region 1.

Note that N' in Fig. 3(a) represents the number until the horizontal cutting path 3 created from the bottom edge 11 in the undercut region 1 reaches the horizontal cutting path 30 at the final stage at the location of a highest opening 12 or a location below the location of the highest opening 12 by a shorter distance than cutting width of an undercut cutting tool, as in 1(3) below, while Fig. 3(b) represents a case where the horizontal cutting path 3 corresponding to N' of Fig. 3(a) is the location below the highest opening 12 by a distance shorter than the cutting direction width.
1. The following steps are set by the CAD/CAM system.
   (1) Setting of the location of the highest opening 12 corresponding to the uppermost location that allows inserting an undercut cutting tool in a slanted direction, among openings formed in order on the upper side by lamination and sintering.
   (2) Creation of the horizontal cutting path 3 on the interior wall section 21 of the undercut region 1, based on a prescribed location of the cutting blade of the undercut cutting tool, at each location along a slanted direction based on successive undercut angles, from the location 11 at the bottom edge of the undercut region 1, with an unit of the cutting width of the cutting blade.
   (3) Continuous creation of the horizontal cutting path 3 in step (2) above, until the location of the horizontal cutting path 3 successively formed by step (1) above reaches the location at the final stage which is the location of the highest opening 12 set by step (2) above or a location below the location of the highest opening 12 by a shorter distance than the cutting width of the undercut cutting tool.
2. Lamination and sintering in the region from the bottom edge 11 of the undercut region 1 to the highest opening 12.
3. Cutting of the interior wall section 21 in the undercut region 1 along the horizontal cutting paths 3 created by steps 1(2) and (3) above.
4. Lamination and sintering of the highest opening 12 in the undercut region 1 that forms an upper region 13.

In this embodiment, when cutting has been carried out by the undercut cutting tool along the horizontal cutting path 3 where the side is the highest opening 12, since the cutting corresponds to cutting at the final stage, the CAD/CAM system must issue a command for cutting of the horizontal plane of the highest opening 12 and the cutting must actually be carried out.

However, when the opening region at the top edge 23 is extremely narrow, there is no major hindrance to the working efficiency even if cutting of the top edge surface 23 has been carried out.

Nevertheless, when the CAD/CAM system has set the command for further lamination at the location of the highest opening 12, and when the horizontal cutting path 30 at the final stage of step 1(3) above has been created, it is possible to avoid cutting of the highest opening 12 in the horizontal direction similar to the case of the basic construction (a).

The invention will now be explained by an example.

### [Example]

For the Example, as shown in Fig. 4, at the stage where lamination and sintering of a bottom section 22 of the three-dimensional shaped product have been completed, a bottom face of the upper side of the bottom section 22 is cut by rotation of the cutting tool which is equipped with a cutting disc 40 at its bottom edge.

For this embodiment, it is possible to efficiently cut the bottom face in the interior space-forming region 2 by a flat rotation disc at the bottom edge of the cutting tool.

### [Industrial Applicability]

According to the present invention, for shaping of the three-dimensional shaped product constituting the top undercut region and the bottom interior space-forming region, it is possible to avoid cutting of the top edge surface in the interior space-forming region and to accomplish efficient cutting of the interior wall section, and therefore the invention has very high practical value.

### [Reference Signs List]

- 1: Undercut region
- 11: Bottom edge location and bottom edge surface in undercut region
- 12: Highest opening in undercut region
- 13: Upper region at highest opening in undercut region
- 2: Interior space-forming region
- 21: Interior wall section
- 22: Bottom section
- 23: Top edge location and top edge surface in interior space-forming region
- 3: Horizontal cutting path
- 30: Horizontal cutting path at final stage
- 4: Cutting tool
- 40: Cutting disc

## Claims

1. A method for producing a three-dimensional shaped product based on lamination with a powder while a squeegee is traveling, sintering of the laminated layer by irradiation with a laser beam or an electron beam, and cutting of the sintered layer with a traveling cutting tool (4), wherein an undercut region (1) at an upper side of the product and a pipe-shaped region (2) with an opening at its top edge and with a bottom (22) at a lower side of the product are joined by the following steps:
1. A CAD/CAM system sets the following steps, wherein the CAD/CAM system is programmed to automatically cut in the horizontal direction at the opening at the top edge of the pipe-shaped region (2) when a final cutting stage has been completed:
(1) Creation of a shape of the undercut region (1) that has an opening corresponding to the opening of the pipe-shaped region (2) at a bottom edge of the undercut region (1), and creation of a shape of the pipe-shaped region (2);
(2) Creation of a cutting path (3) with horizontal direction for each location of successive locations of a cutting blade of the cutting tool on an inner wall (21) of the pipe-shaped region (2), wherein a center location or a lowest location of the cutting blade is selected as a reference for the cutting path (3), and wherein the locations on the inner wall (21) are arranged in regular order along an upwards direction from the bottom (22), wherein a width between successive locations on the inner wall (21) is set by the cutting width of the cutting blade;
(3) When the cutting path (3) with horizontal direction, created in the regular order in step (2) above, has reached the location of the opening of the pipe-shaped region (2) or a location below the opening of the pipe-shaped region (2) by a shorter distance than the cutting width, setting of a command for further lamination on the top edge of the opening of the pipe-shaped region (2) with the purpose of the CAD/CAM system to judge that cutting at the opening of the pipe-shaped region (2) is not the final cutting stage, avoiding thereby a cutting in the horizontal direction at the opening at the top edge of the pipe-shaped region;
(4) A command for joining the bottom edge of the undercut region (1) and the top edge of the pipe-shaped region (2) for determining the location of lamination and sintering of the undercut region (1) with relation to the pipe-shaped region (2);
2. Lamination and sintering in the pipe-shaped region (2) based on step 1(1) above;
3. Cutting the inner wall (21) along the cutting paths (3) with horizontal direction, created by step 1(2) above; and
4. Lamination and sintering in the undercut region (1) based on steps 1(1) and 1(4) above.

2. A method for producing a three-dimensional shaped product based on lamination with a powder while a squeegee is traveling, sintering of the laminated layer by irradiation with a laser beam or an electron beam, and cutting of the sintered layer with a traveling cutting tool (4), wherein an undercut region (1) at an upper side of the product and a pipe-shaped region (2) with an opening at its top edge and with a bottom (22) at a lower side of the product are joined by the following steps:
1. A CAD/CAM system sets the following steps, wherein the CAD/CAM system is programmed to automatically cut in the horizontal direction at the opening at the top edge of the pipe-shaped region (2) when a final cutting stage has been completed:
(1) Creation of a shape of the undercut region (1) that has an opening corresponding to the opening of the pipe-shaped region (2) at a bottom edge of the undercut region (1), and creation of a shape of the pipe-shaped region (2);
(2) Creation of a cutting path (3) with horizontal direction for each location of successive locations of a cutting blade of the cutting tool on an inner wall (21) of the pipe-shaped region (2), wherein a center location or a lowest location of the cutting blade is selected as a reference for the cutting path (3), and wherein the locations on the inner wall (21) are arranged in regular order along an upwards direction from the bottom (22), wherein a width between successive locations on the inner wall (21) is set by the cutting width of the cutting blade;
(3) When the cutting path (3) with horizontal direction, created in the regular order in step (2) above, has reached the location of the opening of the pipe-shaped region (2) or a location below the opening of the pipe-shaped region (2) by a shorter distance than the cutting width, creating a final stage cutting path with horizontal direction at a location that is above the Nth cutting path, by the cutting width, wherein N represents the number of cutting paths in horizontal direction created in step (2) above for reaching the location of the opening of the pipe-shaped region (2) or the location below the opening of the pipe-shaped region (2), and setting a command for stopping the cutting operation at the final stage cutting path by the cutting tool (4) before the cutting tool (4) begins to cut along the final stage cutting path, and avoiding cutting in the horizontal direction at the opening at the top edge of the pipe-shaped region;
(4) A command for joining the bottom edge of the undercut region (1) and the top edge of the pipe-shaped region (2) for determining the location of lamination and sintering of the undercut region (1) with relation to the pipe-shaped region (2);
2. Lamination and sintering in the pipe-shaped region (1) based on step 1(1) above;
3. Cutting the inner wall (21) along the cutting paths (3) with horizontal direction, created by step 1(2) above; and
4. Lamination and sintering in the undercut region (1) based on steps 1(1) and 1(4) above.

3. The method for producing a three-dimensional shaped product by joining the undercut region (1) having a fixed undercut angle of the undercut region and the pipe-shaped region (2) according to claims 1 or 2, wherein lamination, sintering and cutting are carried out in the undercut region by the following steps:
1. The following steps are set by the CAD/CAM system:
(1) Setting a location of a highest opening (12) situated at an uppermost location that allows inserting an undercut cutting tool along a slanted direction of the undercut region (1), among openings formed in regular order along an upwards direction from the opening at the bottom edge of the undercut region (1) by lamination and sintering.
(2) Creation of a cutting path (3) with horizontal direction on the inner wall of the undercut region (1), wherein a center location or a lowest location of the cutting blade is selected as a reference for the cutting path (3), at each location along the slanted direction based on undercut angles of the inner wall of the undercut region (1), from the opening at the bottom edge of the undercut region (1), wherein a width between successive locations on the inner wall of the undercut region (1) is set by the cutting width of the cutting blade;
(3) Continuous creation of the cutting path (3) with horizontal direction in step (2) above, until the location of the cutting path (3) with horizontal direction reaches the location of the highest opening (12) set by step (1) above or a location below the location of the highest opening by a shorter distance than the width of the undercut cutting tool;
2. Lamination and sintering in the region from the opening at the bottom edge of the undercut region (1) to the highest opening;
3. Cutting of the inner wall of the undercut region (1) along the cutting paths (3) with horizontal direction, created by steps 1(2) and 1(3) above; and
4. Lamination and sintering of a region which is formed at an upper part of the highest opening.

4. The method for producing a three-dimensional shaped product by joining the undercut region (1) and the pipe-shaped region (2) according to claim 3, wherein the CAD/CAM system sets a command for further lamination at the location of the highest opening (12), when creation of the cutting path (3) with horizontal direction of step 1(3) above has been reached.

5. The method for producing a three-dimensional shaped product by joining the undercut region (1) and the pipe-shaped region (2) according to any one of claims 1, 2, 3 or 4, wherein, at the stage where lamination and sintering of the bottom (22) in the pipe-shaped region (2) have been completed, an upper side surface of the bottom (22) is cut by rotation of the cutting tool (4) equipped with a cutting disc (40) at its lowest location.

## Patentansprüche

1. Verfahren zum Herstellen eines dreidimensionalen geformten Produkts basierend auf einer Laminierung mit einem Pulver, während sich eine Rakel bewegt, einem Sintern der laminierten Schicht durch Bestrahlung mit einem Laserstrahl oder einem Elektronenstrahl und einem Schneiden der gesinterten Schicht mit einem sich bewegenden Schneidwerkzeug (4), wobei ein hinterschnittener Bereich (1) an einer Oberseite des Produkts und ein rohrförmiger Bereich (2) mit einer Öffnung an seiner oberen Kante und mit einer Unterseite (22) an einer unteren Seite des Produkts durch die folgenden Schritte verbunden werden:
1. Ein CAD/CAM-System legt die folgenden Schritte fest, wobei das CAD/CAM-System so programmiert ist, dass es automatisch in der horizontalen Richtung an der Öffnung an der oberen Kante des rohrförmigen Bereichs (2) schneidet, wenn eine finale Schneidestufe abgeschlossen ist:
(1) Erzeugen einer Form des hinterschnittenen Bereichs (1), die eine Öffnung aufweist, die der Öffnung des rohrförmigen Bereichs (2) an einer unteren Kante des hinterschnittenen Bereichs (1) entspricht, und Erzeugen einer Form des rohrförmigen Bereichs (2);
(2) Erzeugen eines Schneidpfades (3) mit horizontaler Richtung für jeden Ort von aufeinanderfolgenden Orten einer Schneidklinge des Schneidwerkzeugs an einer Innenwand (21) des rohrförmigen Bereichs (2), wobei ein mittlerer Ort oder ein unterster Ort der Schneidklinge als eine Referenz für den Schneidpfad (3) ausgewählt wird, und wobei die Orte an der Innenwand (21) in regelmäßiger Reihenfolge entlang einer Aufwärtsrichtung von der Unterseite (22) angeordnet sind, wobei eine Breite zwischen aufeinanderfolgenden Orten an der Innenwand (21) durch die Schneidbreite der Schneidklinge festgelegt wird;
(3) Wenn der Schneidpfad (3) mit horizontaler Richtung, der in der regelmäßigen Reihenfolge im obigen Schritt (2) erzeugt wird, den Ort der Öffnung des rohrförmigen Bereichs (2) oder einen Ort unterhalb der Öffnung des rohrförmigen Bereichs (2) um einen kürzeren Abstand als die Schneidbreite erreicht, Festlegen eines Befehls für eine weitere Laminierung an der oberen Kante der Öffnung des rohrförmigen Bereichs (2) mit dem Zweck, dass das CAD/CAM-System beurteilt, dass ein Schneiden an der Öffnung des rohrförmigen Bereichs (2) nicht die finale Schneidestufe ist, wodurch ein Schneiden in der horizontalen Richtung an der Öffnung an der oberen Kante des rohrförmigen Bereichs vermieden wird;
(4) Einen Befehl zum Verbinden der unteren Kante des hinterschnittenen Bereichs (1) und der oberen Kante des rohrförmigen Bereichs (2) zum Bestimmen des Ortes der Laminierung und eines Sinterns des hinterschnittenen Bereichs (1) in Bezug auf den rohrförmigen Bereich (2);
2. Laminierung und Sintern in dem rohrförmigen Bereich (2) basierend auf dem obigen Schritt 1(1);
3. Schneiden der Innenwand (21) entlang der Schneidpfade (3) mit horizontaler Richtung, die durch den obigen Schritt 1(2) erzeugt werden; und
4. Laminierung und Sintern in dem hinterschnittenen Bereich (1), basierend auf den obigen Schritten 1(1) und 1(4).

2. Verfahren zum Herstellen eines dreidimensionalen geformten Produkts basierend auf einer Laminierung mit einem Pulver, während sich eine Rakel bewegt, einem Sintern der laminierten Schicht durch Bestrahlung mit einem Laserstrahl oder einem Elektronenstrahl und einem Schneiden der gesinterten Schicht mit einem sich bewegenden Schneidwerkzeug (4), wobei ein hinterschnittener Bereich (1) an einer Oberseite des Produkts und ein rohrförmiger Bereich (2) mit einer Öffnung an seiner oberen Kanten und mit einer Unterseite (22) an einer unteren Seite des Produkts durch die folgenden Schritte verbunden werden:
1. Ein CAD/CAM-System legt die folgenden Schritte fest, wobei das CAD/CAM-System so programmiert ist, dass es automatisch in der horizontalen Richtung an der Öffnung an der oberen Kante des rohrförmigen Bereichs (2) schneidet, wenn eine finale Schneidestufe abgeschlossen ist:
(1) Erzeugen einer Form des hinterschnittenen Bereichs (1), die eine Öffnung aufweist, die der Öffnung des rohrförmigen Bereichs (2) an einer unteren Kante des hinterschnittenen Bereichs (1) entspricht, und Erzeugen einer Form des rohrförmigen Bereichs (2);
(2) Erzeugen eines Schneidpfades (3) mit horizontaler Richtung für jeden Ort von aufeinanderfolgenden Orten einer Schneidklinge des Schneidwerkzeugs an einer Innenwand (21) des rohrförmigen Bereichs (2), wobei ein mittlerer Ort oder ein unterster Ort der Schneidklinge als eine Referenz für den Schneidpfad (3) ausgewählt wird, und wobei die Orte an der Innenwand (21) in regelmäßiger Reihenfolge entlang einer Aufwärtsrichtung von der Unterseite (22) angeordnet sind, wobei eine Breite zwischen aufeinanderfolgenden Orten an der Innenwand (21) durch die Schneidbreite der Schneidklinge festgelegt wird;
(3) Wenn der Schneidpfad (3) mit horizontaler Richtung, der in der regelmäßigen Reihenfolge im obigen Schritt (2) erzeugt wird, den Ort der Öffnung des rohrförmigen Bereichs (2) oder einen Ort unterhalb der Öffnung des rohrförmigen Bereichs (2) um einen kürzeren Abstand als die Schneidbreite erreicht hat, Erzeugen eines Finalstufen-Schneidpfads mit horizontaler Richtung an einem Ort, der um die Schneidbreite über dem N-ten Schneidpfad liegt, wobei N die Anzahl der im obigen Schritt (2) erzeugten Schneidpfade in horizontaler Richtung darstellt, um den Ort der Öffnung des rohrförmigen Bereichs (2) oder den Ort unterhalb der Öffnung des rohrförmigen Bereichs (2) zu erreichen, und Festlegen eines Befehls zum Anhalten des Schneidvorgangs am Finalstufen-Schneidpfad durch das Schneidwerkzeug (4), bevor das Schneidwerkzeug (4) entlang des Finalstufen-Schneidpfads zu schneiden beginnt, und Vermeiden eines Schneidens in der horizontalen Richtung an der Öffnung an der oberen Kante des rohrförmigen Bereichs;
(4) Einen Befehl zum Verbinden der unteren Kante des hinterschnittenen Bereichs (1) und der oberen Kante des rohrförmigen Bereichs (2) zum Bestimmen des Ortes der Laminierung und eines Sinterns des hinterschnittenen Bereichs (1) in Bezug auf den rohrförmigen Bereich (2);
2. Laminierung und Sintern in dem rohrförmigen Bereich (1) basierend auf dem obigen Schritt 1(1);
3. Schneiden der Innenwand (21) entlang der Schneidpfade (3) mit horizontaler Richtung, die durch den obigen Schritt 1(2) erzeugt werden; und
4. Laminierung und Sintern in dem hinterschnittenen Bereich (1) gemäß den obigen Schritten 1(1) und 1(4).

3. Verfahren zum Herstellen eines dreidimensionalen geformten Produkts durch Verbinden des hinterschnittenen Bereichs (1), der einen festen Hinterschneidungswinkel des hinterschnittenen Bereichs aufweist, und des rohrförmigen Bereichs (2) nach Anspruch 1 oder 2, wobei Laminierung, Sintern und Schneiden in dem hinterschnittenen Bereich durch die folgenden Schritte ausgeführt werden:
1. Die folgenden Schritte werden durch das CAD/CAM-System festgelegt:
(1) Festlegen eines Ortes einer höchsten Öffnung (12), der sich an einem obersten Ort befindet, der ein Einsetzen eines Hinterschnitt-Schneidwerkzeugs entlang einer schrägen Richtung des hinterschnittenen Bereichs (1) ermöglicht, unter Öffnungen, die in regelmäßiger Reihenfolge entlang einer Aufwärtsrichtung von der Öffnung an der unteren Kante des hinterschnittenen Bereichs (1) durch Laminierung und Sintern gebildet werden.
(2) Erzeugen eines Schneidpfades (3) mit horizontaler Richtung an der Innenwand des hinterschnittenen Bereichs (1), wobei ein zentraler Ort oder ein unterster Ort der Schneidklinge als eine Referenz für den Schneidpfad (3) an jedem Ort entlang der schrägen Richtung basierend auf Hinterschneidungswinkeln der Innenwand des hinterschnittenen Bereichs (1) von der Öffnung an der Unterkante des hinterschnittenen Bereichs (1) ausgewählt wird, wobei eine Breite zwischen aufeinanderfolgenden Orten an der Innenwand des hinterschnittenen Bereichs (1) durch die Schneidbreite der Schneidklinge festgelegt wird;
(3) Kontinuierliches Erzeugen des Schneidpfades (3) mit horizontaler Richtung im obigen Schritt (2), bis der Ort des Schneidpfades (3) mit horizontaler Richtung den Ort der höchsten Öffnung (12), der im obigen Schritt (1) festgelegt wird, oder einen Ort unterhalb des Ortes der höchsten Öffnung um einen kürzeren Abstand als die Breite des Hinterschnitt-Schneidwerkzeugs erreicht;
2. Laminierung und Sintern in dem Bereich von der Öffnung an der unteren Kante des hinterschnittenen Bereichs (1) bis zu der höchsten Öffnung;
3. Schneiden der Innenwand des hinterschnittenen Bereichs (1) entlang der Schneidpfade (3) mit horizontaler Richtung, die durch die obigen Schritte 1(2) und 1(3) erzeugt werden; und
4. Laminierung und Sintern eines Bereichs, der an einem oberen Teil der obersten Öffnung gebildet wird.

4. Verfahren zum Herstellen eines dreidimensionalen geformten Produkts durch Verbinden des hinterschnittenen Bereichs (1) und des rohrförmigen Bereichs (2) gemäß Anspruch 3, wobei das CAD/CAM-System einen Befehl für eine weitere Laminierung an dem Ort der höchsten Öffnung (12) setzt, wenn eine Erzeugung des Schneidpfads (3) mit horizontaler Richtung des obigen Schritts 1(3) erreicht ist.

5. Verfahren zum Herstellen eines dreidimensionalen geformten Produkts durch Verbinden des hinterschnittenen Bereichs (1) und des rohrförmigen Bereichs (2) nach einem der Ansprüche 1, 2, 3 oder 4, wobei in der Stufe, in der eine Laminierung und ein Sintern der Unterseite (22) in dem rohrförmigen Bereich (2) abgeschlossen ist, eine obere Seitenoberfläche der Unterseite (22) durch Rotation des Schneidwerkzeugs (4), das mit einer Schneidscheibe (40) ausgestattet ist, an seinem untersten Ort geschnitten wird.

## Revendications

1. Procédé de fabrication d'un produit de forme tridimensionnelle basé sur la stratification avec une poudre pendant le déplacement d'une raclette, le frittage de la couche stratifiée par irradiation avec un faisceau laser ou un faisceau d'électrons, et la coupe de la couche frittée avec un outil de coupe (4) mobile, dans lequel une zone de contre-dépouille (1) sur le côté supérieur du produit et une zone en forme de tuyau (2) avec une ouverture sur son bord supérieur et un fond (22) sur le côté inférieur du produit sont jointes par les étapes suivantes :
1. un système CAO/FAO définit les étapes suivantes, dans lequel le système CAO/FAO est programmé pour couper automatiquement dans le sens horizontal l'ouverture du bord supérieur de la zone en forme de tuyau (2) lorsqu'une étape de coupe finale a été achevée :
(1) création d'une forme de la zone de contre-dépouille (1) qui présente une ouverture correspondant à l'ouverture de la zone en forme de tuyau (2) sur un bord inférieur de la zone de contre-dépouille (1), et création d'une forme de la zone en forme de tuyau (2) ;
(2) création d'une trajectoire de coupe (3) avec un sens horizontal pour chaque emplacement des emplacements successifs d'une lame de coupe de l'outil de coupe sur une paroi intérieure (21) de la zone en forme de tuyau (2), dans laquelle un emplacement central ou un emplacement le plus bas de la lame de coupe est sélectionné comme référence pour la trajectoire de coupe (3), et dans laquelle les emplacements sur la paroi intérieure (21) sont disposés dans un ordre régulier le long d'un sens ascendant à partir du fond (22), dans laquelle une largeur entre les emplacements successifs sur la paroi intérieure (21) est définie par la largeur de coupe de la lame de coupe ;
(3) lorsque la trajectoire de coupe (3) dans le sens horizontal, créée dans l'ordre régulier à l'étape (2) ci-dessus, a atteint l'emplacement de l'ouverture de la zone en forme de tuyau (2) ou un emplacement en-dessous de l'ouverture de la zone en forme de tuyau (2) sur une distance plus courte que la largeur de coupe, le réglage d'une commande pour une stratification supplémentaire sur le bord supérieur de l'ouverture de la zone en forme de tuyau (2) afin que le système CAO/FAO juge que la coupe à l'ouverture de la zone en forme de tuyau (2) n'est pas l'étape de coupe finale, évitant ainsi une coupe dans le sens horizontal à l'ouverture sur le bord supérieur de la zone en forme de tuyau ;
(4) une commande pour joindre le bord inférieur de la zone de contre-dépouille (1) et le bord supérieur de la zone en forme de tuyau (2) afin de déterminer l'emplacement de la stratification et du frittage de la zone de contre-dépouille (1) par rapport à la zone en forme de tuyau (2) ;
2. stratification et frittage dans la zone en forme de tuyau (2) sur la base de l'étape 1(1) ci-dessus ;
3. coupe de la paroi intérieure (21) le long des trajectoires de coupe (3) dans le sens horizontal, créées par l'étape 1(2) ci-dessus ; et
4. stratification et frittage dans la zone de contre-dépouille (1) sur la base des étapes 1(1) et 1(4) ci-dessus.

2. Procédé de fabrication d'un produit de forme tridimensionnelle basé sur la stratification avec une poudre pendant le déplacement d'une raclette, le frittage de la couche stratifiée par irradiation avec un faisceau laser ou un faisceau d'électrons, et la coupe de la couche frittée avec un outil de coupe (4) mobile, dans lequel une zone de contre-dépouille (1) sur le côté supérieur du produit et une zone en forme de tuyau (2) avec une ouverture sur son bord supérieur et un fond (22) sur le côté inférieur du produit sont jointes par les étapes suivantes :
1. un système CAO/FAO définit les étapes suivantes, dans lequel le système CAO/FAO est programmé pour couper automatiquement dans le sens horizontal l'ouverture du bord supérieur de la zone en forme de tuyau (2) lorsqu'une étape de coupe finale a été achevée :
(1) création d'une forme de la zone de contre-dépouille (1) qui présente une ouverture correspondant à l'ouverture de la zone en forme de tuyau (2) sur un bord inférieur de la zone de contre-dépouille (1), et création d'une forme de la zone en forme de tuyau (2) ;
(2) création d'une trajectoire de coupe (3) avec un sens horizontal pour chaque emplacement des emplacements successifs d'une lame de coupe de l'outil de coupe sur une paroi intérieure (21) de la zone en forme de tuyau (2), dans laquelle un emplacement central ou un emplacement le plus bas de la lame de coupe est sélectionné comme référence pour la trajectoire de coupe (3), et dans laquelle les emplacements sur la paroi intérieure (21) sont disposés dans un ordre régulier le long d'un sens ascendant à partir du fond (22), dans laquelle une largeur entre les emplacements successifs sur la paroi intérieure (21) est définie par la largeur de coupe de la lame de coupe ;
(3) lorsque la trajectoire de coupe (3) dans le sens horizontal, créée dans l'ordre régulier à l'étape (2) ci-dessus, a atteint l'emplacement de l'ouverture de la zone en forme de tuyau (2) ou un emplacement en-dessous de l'ouverture de la zone en forme de tuyau (2) sur une distance plus courte que la largeur de coupe, la création d'une trajectoire de coupe finale dans le sens horizontal à un emplacement qui est au-dessus de la Nième trajectoire de coupe, par la largeur de coupe, où N représente le nombre de trajectoires de coupe dans le sens horizontal créées à l'étape (2) ci-dessus pour atteindre l'emplacement de l'ouverture de la zone en forme de tuyau (2) ou l'emplacement en-dessous de l'ouverture de la zone en forme de tuyau (2), et en réglant une commande pour arrêter l'opération de coupe à l'étape finale de la trajectoire de coupe par l'outil de coupe (4) avant que l'outil de coupe (4) ne commence à couper le long de la trajectoire de coupe de l'étape finale, et en évitant de couper dans le sens horizontal à l'ouverture sur le bord supérieur de la zone en forme de tuyau ;
(4) une commande pour joindre le bord inférieur de la zone de contre-dépouille (1) et le bord supérieur de la zone en forme de tuyau (2) afin de déterminer l'emplacement de la stratification et du frittage de la zone de contre-dépouille (1) par rapport à la zone en forme de tuyau (2) ;
2. stratification et frittage dans la zone en forme de tuyau (1) sur la base de l'étape 1(1) ci-dessus ;
3. coupe de la paroi intérieure (21) le long des trajectoires de coupe (3) dans le sens horizontal, créées par l'étape 1(2) ci-dessus ; et
4. stratification et frittage dans la zone de contre-dépouille (1) sur la base des étapes 1(1) et 1(4) ci-dessus.

3. Procédé de fabrication d'un produit de forme tridimensionnelle par assemblage de la zone de contre-dépouille (1) ayant un angle de contre-dépouille fixe de la zone de contre-dépouille et de la zone en forme de tuyau (2) selon les revendications 1 ou 2, dans lequel la stratification, le frittage et le découpage sont effectués dans la zone de contre-dépouille selon les étapes suivantes :
1. les étapes suivantes sont définies par le système CAO/FAO :
(1) réglage de l'emplacement d'une ouverture la plus haute (12) située à un emplacement supérieur qui permet d'insérer un outil de coupe de contre-dépouille le long d'un sens incliné de la zone de contre-dépouille (1), parmi les ouvertures formées dans un ordre régulier le long d'un sens ascendant à partir de l'ouverture au bord inférieur de la zone de contre-dépouille (1) par stratification et frittage.
(2) création d'une trajectoire de coupe (3) dans le sens horizontal sur la paroi intérieure de la zone de contre-dépouille (1), dans laquelle un emplacement central ou un emplacement le plus bas de la lame de coupe est sélectionné comme référence pour la trajectoire de coupe (3), à chaque emplacement le long du sens incliné en fonction des angles de contre-dépouille de la paroi intérieure de la zone de contre-dépouille (1), à partir de l'ouverture au bord inférieur de la zone de contre-dépouille (1), dans laquelle une largeur entre les emplacements successifs sur la paroi intérieure de la zone de contre-dépouille (1) est définie par la largeur de coupe de la lame de coupe ;
(3) création continue de la trajectoire de coupe (3) dans le sens horizontal à l'étape (2) ci-dessus, jusqu'à ce que l'emplacement de la trajectoire de coupe (3) dans le sens horizontal atteigne l'emplacement de l'ouverture la plus haute (12) défini à l'étape (1) ci-dessus ou un emplacement en dessous de l'emplacement de l'ouverture la plus haute sur une distance plus courte que la largeur de l'outil de coupe en contre-dépouille ;
2. stratification et frittage dans la zone allant de l'ouverture au bord inférieur de la zone de contre-dépouille (1) jusqu'à l'ouverture la plus haute ;
3. coupe de la paroi intérieure de la zone de contre-dépouille (1) le long des trajectoires de coupe (3) dans le sens horizontal, créées par les étapes 1(2) et 1(3) ci-dessus ; et
4. stratification et frittage d'une zone qui est formée dans la partie supérieure de l'ouverture la plus haute.

4. Procédé de fabrication d'un produit de forme tridimensionnelle par assemblage de la zone de contre-dépouille (1) et de la zone en forme de tuyau (2) selon la revendication 3, dans lequel le système CAO/FAO définit une commande pour une stratification supplémentaire à l'emplacement de l'ouverture la plus haute (12), lorsque la création de la trajectoire de coupe (3) avec le sens horizontal de l'étape 1(3) ci-dessus a été atteinte.

5. Procédé de fabrication d'un produit de forme tridimensionnelle par assemblage de la zone de contre-dépouille (1) et de la zone en forme de tuyau (2) selon l'une quelconque des revendications 1, 2, 3 ou 4, dans lequel, au stade où la stratification et le frittage du fond (22) dans la zone en forme de tuyau (2) sont terminés, une surface latérale supérieure du fond (22) est coupée par rotation de l'outil de coupe (4) équipé d'un disque de coupe (40) à son emplacement le plus bas.
